# EUROPÄISCHE PATENTSCHRIFT

(11) **EP 3 488 205 B1**
(45) Veröffentlichungstag und Bekanntmachung des Hinweises auf die Patenterteilung: **07.12.2022**
(21) Anmeldenummer: 17751651.5
(22) Anmeldetag: 20.07.2017
(51) Int. Cl.: G01K 7/42

(54) **VERFAHREN ZUR SCHÄTZUNG EINER ZEITLICH VERÄNDERBAREN MESSGRÖSSE EINES SYSTEMS**
METHOD FOR ESTIMATING A TIME-VARIABLE MEASUREMENT VARIABLE OF A SYSTEM
PROCÉDÉ POUR ESTIMER UNE GRANDEUR DE MESURE D'UN SYSTÈME VARIANT AVEC LE TEMPS

(30) Priorität: 21.07.2016 DE 102016113494
(43) Veröffentlichungstag der Anmeldung: 29.05.2019
(73) Patentinhaber: Vorwerk & Co. Interholding GmbH, 42270 Wuppertal (DE)
(72) Erfinder: YAN, Wenjie, 40476 Düsseldorf (DE)
(74) Vertreter: Bals & Vogel Patentanwälte PartGmbB
(86) Internationale Anmeldenummer: PCT/EP2017/068337
(87) Internationale Veröffentlichungsnummer: WO 2018/015485

(56) Entgegenhaltungen:
- EP-A1- 2 388 564
- US-B1- 6 462 316

## Beschreibung

Die vorliegende Erfindung betrifft ein Verfahren gemäß der im Oberbegriff des Anspruchs 1 näher definierten Art.

Das Ziel einer Messung ist üblicherweise, eine quantitative Aussage über eine Messgröße zu erhalten. Meist weicht dabei der gemessene Wert von dem wahren Wert der Messgröße ab, wobei diese Abweichung in vielen Fällen vernachlässigbar ist oder in einfacher Weise herausgerechnet werden kann. Auch ist es bekannt, physikalische Modelle zu nutzen, um damit und anhand zumindest eines Messwertes den wahren Wert zu berechnen bzw. zu schätzen. Die dazu notwendigen Einflüsse, insbesondere Systemparameter, sind dabei meist hinreichend bekannt, lassen sich schätzen oder sind vernachlässigbar.

EP 2 388 564 A1 und US 6 462 316 B1 offenbaren jeweils Verfahren zur Schätzung einer Temperatur im Inneren eines Gefäßes bzw. des Gefäßes selbst, bei denen aus einer Messung eines mit dieser korrelierten Parameters (einer Heizleistung bzw. einer außerhalb des Gefäßes gemessenen Temperatur) auf die zu bestimmende Temperatur geschlossen wird.

Häufig ist allerdings ein Problem, dass bei dynamischen Prozessen sich der Zustand des dynamischen Systems bzw. die Systemparameter nicht direkt ermitteln lassen und/oder nur unvollständig beobachtet werden können. Besonders problematisch ist es, wenn bei einer zeitlich veränderbaren Messgröße eines (dynamischen) Systems der Ort der Messgröße und der Messort, an welchem eine Messinformation, z. B. der Messwert, ermittelt wird, sich deutlich unterscheiden.

So kann es bspw. erforderlich sein, dass in einem Gefäß die Innentemperatur gemessen werden soll, ohne dass ein Sensor in den Innenraum des Gefäßes eingebracht werden kann. Bspw. ist es lediglich möglich, dass ein Sensor an einer Heizplatte angeordnet ist, welche zum Erhitzen des Gefäßes bzw. des Inhalts des Gefäßes vorgesehen ist. Die Temperatur, welche durch den Sensor gemessen werden kann, weicht dabei stark von der Innentemperatur des Gefäßes ab. Erschwerend kommt hinzu, dass diese Abweichung schwer oder gar nicht vorhersagbar ist, da die Abweichung bspw. von der spezifischen Wärmekapazität des Inhalts des Gefäßes abhängig ist. Der Inhalt ist bspw. mindestens ein Lebensmittel, welches im Gefäß zubereitet wird, und welches üblicherweise nicht bekannt ist.

Es beeinflussen also eine Vielzahl von Faktoren diese Abweichung, wobei diese Faktoren nachfolgend als Systemparameter bezeichnet werden. Es ist zwar denkbar, dass weitere Sensoren eingesetzt werden, um die Innentemperatur des Gefäßes zu messen. Dies würde allerdings zusätzliche Herstellungskosten verursachen und eine komplexe und aufwendige Fertigung und Montage mit sich bringen.

Es ist daher ein Nachteil, dass üblicherweise dann, wenn eine Messgröße nicht direkt durch einen Sensor gemessen werden kann, zur Annäherung an den wahren Wert (z. B. durch weitere Sensoren) ein hoher Fertigungs- und/oder Montage- und/oder Kostenaufwand notwendig ist. Ein weiterer Nachteil ist, dass im Stand der Technik die Abweichung zum wahren Wert häufig nicht hinreichend genau bestimmt werden kann. Dies trifft insbesondere zu bei herkömmlichen Messverfahren zur Ermittlung der Temperatur im Innenraum eines Gefäßes einer Küchenmaschine oder im Innenraum, insbesondere Garraum, eines Ofens. Es ist daher eine Aufgabe der vorliegenden Erfindung, die voranstehend beschriebenen Nachteile zumindest teilweise zu beheben. Insbesondere ist es Aufgabe der Erfindung, eine einfachere, zuverlässigere und genauere Ermittlung des wahren Wertes einer Messgröße zu ermöglichen.

Die voranstehende Aufgabe wird gelöst durch ein Verfahren mit den Merkmalen des Anspruchs 1. Weitere Merkmale und Details der Erfindung ergeben sich aus den jeweiligen Unteransprüchen, der Beschreibung und den Zeichnungen.

Die Aufgabe wird gelöst durch ein Verfahren zur Schätzung einer zeitlich veränderbaren (bspw. ersten) Messgröße eines Systems. Bei der Messgröße handelt es sich um eine Innentemperatur eines Gefäßes einer Küchenmaschine zur zumindest teilweise automatischen Zubereitung von Lebensmitteln oder eines Innenraums eines Ofens.

Die Küchenmaschine ist vorzugsweise derart ausgeführt, dass sie eine Heizfunktion aufweist, insbesondere mittels eines Heizelements, d. h. z. B. einer Heizung mit einer Heizplatte. Vorzugsweise ist dabei das Heizelement und/oder die Heizplatte derart benachbart zu dem Gefäß angeordnet, dass eine Wärmeübertragung in den Innenraum des Gefäßes möglich ist, insbesondere zur Erhitzung des im Innenraum des Gefäßes vorhandenen Lebensmittels bzw. der Lebensmittel.

Bevorzugt betrifft das System einen dynamischen Prozess und/oder ein Messsystem (und/oder ein sonstiges dynamisches System, bei welchem eine Messung und/oder Wärmeübertragung erfolgt), nämlich bei einer Küchenmaschine und/oder bei einem Ofen. Dabei erfolgt bei dem System eine zeitliche Temperaturentwicklung und/oder Wärmeübertragung, vorzugsweise durch die Erhitzung mittels eines Heizelements, erfindungsgemäß bei einer Küchenmaschine und/oder bei einem Ofen. Das System ist bevorzugt als ein dynamisches System anzusehen und/oder anhand eines Modells (innerhalb bestimmter Grenzen bzw. annähernd) beschreibbar.

Es ist dabei vorgesehen, dass durch eine Messung (insbesondere zumindest einer weiteren Messgröße) mindestens eine Messinformation (z. B. über den Messwert oder die weitere Messgröße) ermittelt wird, welche sich zumindest in Abhängigkeit von mindestens einem Systemparameter von dem wahren Wert der Messgröße (bzw. ersten Messgröße) unterscheidet. Der Systemparameter ist dabei bspw. ein Einflussfaktor auf diesen Unterschied, d. h. auf die Abweichung zwischen dem anhand der Messinformation ermittelbaren Wert der Messgröße und dem tatsächlichen wahren Wert der Messgröße. Insbesondere ist der Systemparameter dabei abhängig von dem Zustand des Systems, insbesondere dynamischen Systems, und/oder von einer Wärmekapazität, insbesondere des Lebensmittels und/oder des Inhalts in dem Gefäß, und/oder von einem Wärmeübergang zwischen einem Messort der Messung und einem weiteren Ort der Messgröße, und/oder einem Wärmeübergangskoeffizienten, und/oder einer Leistung für das Erhitzen z. B. eines Heizelements, und/oder einer Eigenschaft des Heizelements, z. B. der Masse einer Heizplatte, und/oder einer spezifischen Wärmekapazität der Heizplatte, und/oder einem Betrieb z. B. der Küchenmaschine. Insbesondere kann die Messinformation auch eine erste Messinformation umfassen, welche z. B. durch einen Sensor ermittelt wird, und/oder eine zweite Messinformation umfassen, welche z. B. anhand einer Betriebsinformation und/oder eine Bedienereingabe, z. B. einer Eingabe einer Art des zubereiteten Lebensmittels, ermittelt wird, und/oder weitere Messinformationen umfassen, z. B. ein Gewicht des Lebensmittels, welches durch eine Waage ermittelt wird.

Erfindungsgemäß ist dabei vorgesehen, dass für die Schätzung des wahren Werts (der zeitlich veränderbaren Messgröße bzw. ersten Messgröße) die nachfolgenden Schritte durchgeführt werden, vorzugsweise nacheinander oder in beliebiger Reihenfolge:
a) Bereitstellen von mindestens einem oder mehreren Systemparametervorschlägen, welche sich jeweils voneinander unterscheiden, und jeweils einen Vorschlag für mindestens einen der Systemparameter umfassen, bevorzugt für jeden der Systemparameter,
b) Prüfen der Systemparametervorschläge (bzw. der jeweiligen Systemparametervorschläge), wobei ein (insbesondere zeitlich aufeinanderfolgendes) wiederholtes Durchführen der Messung und/oder ein (wiederholtes) Gewichten anhand der dabei ermittelten Messinformationen erfolgt, sodass eine Bewertung der Systemparametervorschläge bereitgestellt wird und/oder bereitgestellt werden kann,
c) Durchführen der Schätzung anhand mindestens eines der Systemparametervorschläge und/oder anhand jeder der Systemparametervorschläge unter Berücksichtigung der Bewertung.

Gemäß Schritt b) erfolgt dabei ein wiederholtes Durchführen der Messung, sodass bei jeder Durchführung erneut die Messinformation ermittelt wird und anhand dieser die Gewichtung erfolgen kann. Mit anderen Worten wird wiederholt die Messung durchgeführt, um jeweils einen aktuellen Messwert zu erfassen, welcher abhängig von dem wahren Wert der zeitlich veränderbaren Messgröße ist. Vorzugsweise kann somit durch die wiederholte Durchführung der Messung ein zeitlicher Verlauf der Messinformation ermittelt werden, wobei dieser konkrete Verlauf abhängig ist von dem mindestens einen Systemparameter und dem wahren Wert der zeitlich veränderbaren Messgröße. Da insbesondere sowohl der (wahre) Systemparameter als auch der wahre Wert der Messgröße unbekannt ist, wird z. B. durch die Systemparametervorschläge jeweils ein möglicher Wert für den Systemparameter vorgeschlagen, und/oder anhand der Systemparametervorschläge jeweils ein zukünftiger Wert für die ermittelte Messinformation im zeitlichen Verlauf vorgeschlagen, d. h. z. B. berechnet und/oder vorhergesagt. Vorzugsweise können dann die einzelnen Systemparametervorschläge dadurch geprüft werden, dass der vorhergesagte Wert mit der ermittelten Messinformation verglichen wird. Bspw. kann dann als Kriterium für die Gewichtung geprüft werden, wie stark die Übereinstimmung des vorhergesagten Werts mit der ermittelten Messinformation ist, da z. B. davon ausgegangen wird, dass bei der höchsten Übereinstimmung auch der entsprechende Systemparametervorschlag die höchste Übereinstimmung mit dem wahren Systemparameter hat.

Insbesondere hat damit das erfindungsgemäße Verfahren den Vorteil, dass auf einen Aufbau mit mindestens einem Sensor, welcher direkt die Messgröße erfasst, verzichtet werden kann. Weiter ist es insbesondere vorteilhaft, dass besonders einfach und zuverlässig unbekannte Parameter geschätzt und bewertet werden können. Dies ermöglicht die zuverlässige Schätzung des wahren Wertes der Messgröße. Bevorzugt kann dabei vorgesehen sein, dass die Schritte a) bis c) zumindest teilweise und/oder ausschließlich durch eine Verarbeitungsvorrichtung, insbesondere einer Elektronik und/oder einem Prozessor, durchgeführt werden. Dies ermöglicht die schnelle, kostengünstige und zuverlässige Schätzung des wahren Werts der Messgröße. Erfindungsgemäß kann nach einigen wiederholten Durchführungen gemäß Schritt b) die Schätzung anhand des Systemparameters durchgeführt werden, welcher die beste Bewertung aufweist.

Es ist denkbar, dass die Systemparametervorschläge und/oder die Systemparameter jeweils Parameter für ein Modell, insbesondere für ein Prozessmodell und/oder stochastisches Modell der Systemdynamik des Systems, sind. Insbesondere kann es daher auch möglich sein, dass die Systemparameter lediglich Modellparameter sind, sodass sämtliche Systemparameter lediglich zur Annäherung an einer wahren Abweichung zwischen dem wahren Wert der Messgröße und der Messinformation dienen können. Mit anderen Worten kann es möglich sein, dass sich die Messinformation nicht nur in Abhängigkeit von dem mindestens einen Systemparameter von dem wahren Wert der Messgröße unterscheidet, sondern auch noch von weiteren Einflussfaktoren, welche bspw. unberücksichtigt bleiben. Vorzugsweise sind daher das Bereitstellen gemäß Schritt a) und/oder das Prüfen gemäß Schritt b) und/oder das Durchführen der Schätzung gemäß Schritt c) abhängig von diesem Modell, wobei insbesondere eine Vorhersage anhand des Systemparametervorschlags und/oder das Durchführen der Schätzung anhand des Modells erfolgt, insbesondere derart, dass die Systemparametervorschläge für die Berechnung als Modellparameter verwendet werden. Vorzugsweise wird daher für jeden der Systemparametervorschläge jeweils eine Modellberechnung mit unterschiedlichen Modellparametern (in Abhängigkeit von den jeweiligen Systemparametervorschlägen) durchgeführt. Mit anderen Worten wird für jeden Systemparametervorschlag jeweils (insbesondere) das gleiche Modell nur mit unterschiedlichen Modellparametern zur Berechnung genutzt. Insbesondere wird dazu das Modell, welches für die Schritte a) bis c) verwendet wird, in Abhängigkeit von dem System ausgewählt. Dies ermöglicht eine besonders zuverlässige Schätzung des wahren Wertes der zeitlich veränderbaren Messgröße.

Bevorzugt ist die Messgröße dadurch zeitlich veränderbar, dass eine aktive Einwirkung auf die Messgröße durchgeführt wird, bevorzugt durch eine aktive Heizung, z. B. durch ein Heizelement. Diese aktive Einwirkung kann bspw. gesteuert werden, wobei ein zeitlicher Verlauf der Steuerung, vorzugsweise anhand einer Steuerungsinformation, auswertbar ist. Bevorzugt kann es vorgesehen sein, dass diese Einwirkung die vorrangige Ursache für die zeitliche Veränderung der Messgröße ist, sodass andere Einwirkungen vernachlässigbar sind.

Des Weiteren kann es im Rahmen der Erfindung vorgesehen sein, dass die Systemparametervorschläge jeweils einem Informationspartikel zugeordnet sind und/oder werden, für welchen wenigstens die nachfolgenden Informationen bereitgestellt werden können und/oder sind:
- Eine Partikelsysteminformation, welche zumindest den jeweiligen Systemparametervorschlag umfasst und/oder in Abhängigkeit von dem jeweiligen Systemparametervorschlag bestimmt wird,
- eine Partikelvorhersageinformation zur Bereitstellung eines vorhergesagten Wertes einer zukünftigen, d. h. insbesondere als nächstes zu ermittelnden, Messinformation, wobei der vorhergesagte Wert für den jeweiligen Systemparametervorschlag spezifisch ist, insbesondere davon abhängig ist und/oder anhand des Systemparametervorschlag berechnet wird,
- eine Partikelgewichtungsinformation zur Bereitstellung der Bewertung des jeweiligen Systemparametervorschlags.

Insbesondere ist der jeweiligen Informationspartikel als eine Datenstruktur ausgeführt, welche jeweils unterschiedliche Werte für die Partikelsysteminformation und/oder die Partikelvorhersageinformation und/oder die Partikelgewichtungsinformation aufweisen kann. Bevorzugt kann anhand der jeweiligen Informationspartikel eine Modellberechnung zur Vorhersage des wahren Wertes durchgeführt werden. Insbesondere erfolgt das Bereitstellen des vorhergesagten Wertes bei einem jeden Wiederholungsschritt der wiederholten Durchführung gemäß Schritt b), sodass die zukünftige bzw. als nächstes zu ermittelnde Messinformation eine solche Messinformation ist, welche im darauffolgenden Wiederholungsschritt gemäß Schritt b) bei der Messung ermittelt wird. Insbesondere wird der Informationspartikel zur Nutzung mit einem Partikelfilter, z. B. einem Rao-Blackwised Particle Filter (RBPF), genutzt. Dies hat den Vorteil, dass eine besonders zuverlässige und schnelle Durchführung der Wiederholungen gemäß Schritt b) durchgeführt werden können.

Ferner kann es vorgesehen sein, dass zum Prüfen gemäß Schritt b) die nachfolgenden Schritte, vorzugsweise nacheinander oder in beliebiger Reihenfolgen, durchgeführt werden, wobei die Schritte insbesondere wiederholt und/oder iterativ durchgeführt werden, sodass bevorzugt der zeitliche Verlauf der Messinformation bestimmt wird und/oder bestimmt werden kann:
- Durchführen einer Vorhersage der unbekannten zukünftigen, insbesondere als nächstes zu ermittelnden, Messinformation für jeden oder für eine Auswahl der Informationspartikel, sodass insbesondere die jeweilige Partikelvorhersageinformation bestimmt wird und/oder bestimmt werden kann, wobei die jeweilige Vorhersage in Abhängigkeit von der Partikelsysteminformation des jeweiligen Informationspartikels durchgeführt wird, und insbesondere damit in Abhängigkeit von dem jeweiligen Systemparametervorschlag durchgeführt wird,
- Durchführen der Messung, sodass insbesondere die Messinformation bestimmt wird und/oder bestimmt werden kann,
- Evaluieren der Systemparametervorschläge durch einen Vergleich der bestimmten Partikelvorhersageinformationen mit der bestimmten Messinformation, sodass die Bewertung der Systemparametervorschläge erfolgt, vorzugsweise dadurch, dass bei der höchsten Übereinstimmung der bestimmten Partikelvorhersageinformationen mit der bestimmten Messinformation die höchste Bewertung erfolgt, und vorzugsweise die Bewertung der jeweiligen Informationspartikel in Abhängigkeit vom Grad der Übereinstimmung der jeweiligen bestimmten Partikelvorhersageinformation mit der bestimmten Messinformation ist,
- Gewichten anhand der erfolgten Bewertung, insbesondere dadurch, dass die Partikelgewichtungsinformation gemäß der Bewertung bestimmt wird und/oder normalisiert wird.

Dies hat den Vorteil, dass anhand der Gewichtung einfach und schnell der Informationspartikel und damit auch der Systemparametervorschlag ermittelt werden kann, welcher die beste Annäherung an Systemparameter (z. B. zur Bildung von Modellparametern) bietet, um den wahren Wert der Messgröße zu ermitteln.

Optional kann es vorgesehen sein, dass vom Gewichten, insbesondere gemäß Schritt b), die nachfolgenden Schritte durchgeführt werden, vorzugsweise zeitlich nacheinander oder in beliebiger Reihenfolge, wobei bevorzugt Schritt b) wiederholt und/oder iterativ durchgeführt wird, sodass insbesondere nach der Gewichtung erneut die Prüfung gemäß Schritt b) durchgeführt wird und/oder werden kann:
- Durchführen einer Gewichtungsentscheidung anhand einer Evaluation, vorzugsweise anhand der erfolgten Bewertung, und besonders bevorzugt auch anhand der Partikelgewichtungsinformationen, wenn diese bereits zuvor bestimmt wurden (z. B. durch eine Anpassung der bereits vorhandenen Partikelgewichtungsinformationen),
- Bestimmen der Partikelgewichtungsinformationen in Abhängigkeit von der Gewichtungsentscheidung, sodass die Bewertung der Systemparametervorschläge bereitgestellt wird.

Insbesondere kann die Evaluation dadurch erfolgen, dass die Übereinstimmung der Systemparametervorschläge mit den wahren Systemparametern dadurch geprüft werden, dass eine Vorhersage der Messinformation anhand der jeweiligen Systemparametervorschläge mit der durch Messung ermittelten Messinformation verglichen wird. Insbesondere wird dabei unter dem "wahren" Systemparameter auch ein solcher Systemparameter verstanden, welcher als Modellparameter bei der Schätzung des wahren Werts der Messgröße für ein Modell genutzt werden kann, um durch diese Schätzung die höchste Übereinstimmung mit dem wahren Wert der Messgröße zu erhalten. Weiter kann es vorgesehen sein, dass ein Gewichtungskriterium zur Durchführung der Gewichtungsentscheidung in Abhängigkeit von dem Modell ausgewählt wird. Dies hat den Vorteil, dass angepasst auf das Modell eine Gewichtung erfolgen kann.

Es kann außerdem im Rahmen der Erfindung vorteilhaft sein, wenn bei der Durchführung der Messung auch eine Betriebsinformation, vorzugsweise eine Steuerungsinformation, ermittelt wird, vorzugsweise welche von einem Betrieb, insbesondere einer Ansteuerung, der Küchenmaschine und/oder eines Ofens abhängig ist, und/oder einen steuerbaren Einfluss auf die Messgröße hat, wobei die jeweilige Vorhersage in Abhängigkeit von der Betriebsinformation und/oder letzten ermittelten Messinformation und/oder der Partikelsysteminformation des jeweiligen Informationspartikels durchgeführt wird. Insbesondere betrifft die Betriebsinformation (nur) das Ein- und Ausschalten des Heizelements oder die Heizleistung. Bspw. kann zur Vorhersage ein Modell genutzt werden, welches anhand der Systemparametervorschläge (bzw. anhand des Systemparametervorschlags der Partikelsysteminformation des jeweiligen Informationspartikels) parametrisiert wird. Als weitere Eingabewerte für dieses Modell kann dann bspw. die Betriebsinformation und/oder die zuletzt ermittelte Messinformation dienen. Die Betriebsinformation ist dabei bspw. eine Information, ob der steuerbare Einfluss auf die Messgröße aktiviert ist, z. B. ein Heizelement aktiviert ist. Die zuletzt ermittelte Messinformation ist bspw. ein gemessener Messwert einer weiteren Messgröße, welcher abhängig von der zeitlich veränderbaren (ersten) Messgröße ist. Bspw. kann es auch vorgesehen sein, dass das Modell in Abhängigkeit von der Betriebsinformation und/oder in Abhängigkeit von einer weiteren Information, wie z. B. einer Art eines Lebensmittels der Küchenmaschine, ausgewählt wird. Dies ermöglicht einen flexiblen und vielseitigen Einsatz des erfindungsgemäßen Verfahrens.

Außerdem kann es möglich sein, dass bei der Durchführung der Vorhersage die nachfolgenden Schritte durchgeführt werden, vorzugsweise nacheinander oder in beliebiger Reihenfolge:
- Schätzen eines Zustands des Systems, insbesondere eines dynamischen Prozesses des Systems, wobei das Schätzen anhand eines, vorzugsweise stochastischen, Modells in Abhängigkeit von der Partikelsysteminformation des jeweiligen Informationspartikels erfolgt, und vorzugsweise anhand der Steuerungsinformation und/oder der letzten ermittelten Messinformation erfolgt,
- Bestimmen der Partikelvorhersageinformation in Abhängigkeit von dem geschätzten

Zustand. Bspw. kann hierzu auch ein Partikelfilter, insbesondere eine RBPF, zum Einsatz kommen. Auch ist es denkbar, dass hierzu eine sequenzielle Monte-Carlo-Methode eingesetzt wird. Auch kann es vorgesehen sein, dass die Vorhersage und/oder zumindest einer der Schritte a) bis c) des erfindungsgemäßen Verfahrens durch eine Verarbeitungsvorrichtung durchgeführt werden, insbesondere durch mehrere Verarbeitungsvorrichtungen durchgeführt werden, z. B. mindestens 2 oder mindestens 4 oder mindestens 6 oder mindestens 10 oder mindestens 100 Verarbeitungsvorrichtungen. Dies hat den Vorteil, dass eine schnelle und zuverlässige Schätzung des Zustands des Systems möglich ist.

Auch kann es möglich sein, dass das Prüfen gemäß Schritt b) zumindest teilweise, insbesondere das Gewichten und/oder die Vorhersage, parallelisiert durchgeführt werden. Insbesondere ist hierzu mindestens eine Verarbeitungsvorrichtung vorgesehen, welche z. B. mehrere Verarbeitungseinheiten aufweist. Die Verarbeitungsvorrichtung ist z. B. ein Prozessor, welcher mehrere Verarbeitungseinheiten, z. B. Prozessorkerne, umfasst. Auch ist es denkbar, dass die Verarbeitungsvorrichtung als ein digitaler Signalprozessor oder als ein Grafikprozessor ausgeführt ist. Die parallelisierte Durchführung kann bspw. dadurch erfolgen, dass ein oder mehrere Verarbeitungsvorrichtungen gleichzeitig das Prüfen und/oder das Evaluieren und/oder das Vorhersagen und/oder das Gewichten durchführen, insbesondere für jeweils einen oder mehrere Informationspartikel. Bevorzugt ist dabei vorgesehen, dass unterschiedliche Verarbeitungsvorrichtungen und/oder Verarbeitungseinheiten nur unterschiedliche Informationspartikel verarbeiten, sodass insbesondere ein gemeinsamer Zugriff von zwei oder mehr Verarbeitungsvorrichtungen und/oder Verarbeitungseinheiten auf einen gleichen Informationspartikel vermieden wird. Dies hat den Vorteil, dass die parallele Verarbeitung zuverlässig und besonders schnell erfolgen kann, da insbesondere die einzelnen Informationspartikel nicht voneinander abhängig sind (bzw. mit anderen Worten voneinander unabhängig sind).

Erfindungsgemäß erfolgt durch eine wiederholte Durchführung der Prüfung gemäß Schritt b) eine sequenzielle Anpassung der Bewertung, wobei bei jedem Wiederholungsschritt (der wiederholten Durchführung) die Bewertung unter Berücksichtigung vorangegangener Bewertungen und anhand der beim Wiederholungsschritt ermittelten Messinformation angepasst wird, sodass anhand der Gewichtung der optimale Systemparametervorschlag ermittelt wird, welcher die höchste Relevanz für den tatsächlichen Systemparameter aufweist, um ein optimales Schätzungsergebnis für den wahren Wert der Messgröße zu erhalten. Das optimale Schätzungsergebnis ist dabei ein Schätzungsergebnis, welches am meisten mit dem wahren Wert der Messgröße übereinstimmt. Hierdurch wird insbesondere der Vorteil erzielt, dass bereits nach einer kurzen Zeitdauer (z. B. maximal 1 s oder maximal 5 s oder maximal 10 s oder maximal 30 s oder maximal 100 s oder maximal 1.000 s), in welcher die Wiederholungen durchgeführt werden, der Systemparameter mit der höchsten Relevanz ermittelt werden kann. Vorzugsweise kann nach dieser Zeitdauer die Schätzung genutzt werden, um zuverlässig ein Schätzungsergebnis zu ermitteln, welches dem wahren Wert der Messgröße sehr nahekommt. Bevorzugt kann es vorgesehen sein, dass nach dieser Zeitdauer die Schätzung genutzt wird, um anhand des Schätzungsergebnisses dieser Schätzung eine Annäherung an den wahren Wert der Messgröße zu erhalten, welche z. B. für weitere Verarbeitungen und/oder einer Überwachung der Messgröße genutzt wird.

Ferner ist es denkbar, dass zumindest eine erste Auswahl von unterschiedlichen ersten Systemparametern und eine zweite Auswahl von unterschiedlichen zweiten Systemparametern vorgesehen ist, wobei sich die ersten Systemparameter von den zweiten Systemparametern unterscheiden, und wobei insbesondere bei Schritt b) für die ersten Systemparameter eine erste Prüfung, insbesondere mit einer ersten Evaluation, und für die zweiten Systemparameter eine zweite Prüfung, vorzugsweise mit einer zweiten Evaluation, durchgeführt wird, welche vorzugsweise mit jeweils unterschiedlicher Gewichtungslogik durchgeführt werden, wobei anschließend in Abhängigkeit von der ersten und zweiten Prüfung eine Gesamtbewertung für sämtliche Systemparameter erfolgt. Mit anderen Worten kann es vorgesehen sein, dass für unterschiedliche Systemparameter unterschiedlich konfigurierte Prüfungen, z. B. auch anhand unterschiedlicher Modelle, durchgeführt werden. Dabei kann es möglich sein, dass die zweite Prüfung abhängig ist von einem Ergebnis der ersten Prüfung, sodass bspw. ein Modell der zweiten Prüfung anhand des Ergebnisses der ersten Prüfung parametrisiert wird. Auch ist es denkbar, dass weitere Prüfungen durchgeführt werden, vorzugsweise sequenziell durchgeführt werden. Auf diese Weise ist es möglich, dass auch eine Prüfung und/oder Evaluation und/oder Schätzung und/oder Vorhersage bei komplexen Systemen und Modellen erfolgen kann.

Ferner kann es möglich sein, dass mindestens 3 oder mindestens 5 oder mindestens 7 oder mindestens 10 unterschiedliche und unbekannte Systemparameter vorgesehen sind. Insbesondere kann es auch möglich sein, dass diese Systemparameter für unterschiedliche Modelle genutzt werden, z. B. für mindestens 2 oder mindestens 4 oder mindestens 6 unterschiedliche Modelle. Dies ermöglicht einen vielseitigen Einsatz des erfindungsgemäßen Verfahrens.

Gemäß einem weiteren Aspekt der Erfindung kann es vorgesehen sein, dass bei der Prüfung gemäß Schritt b), vorzugsweise bei der Evaluation, insbesondere bei der Vorhersage, mindestens ein Teilergebnis bei wenigstens einer früheren Teilauswertung ermittelt und gespeichert wird, sodass das Teilergebnis bei einer weiteren Prüfung, insbesondere einer weiteren Evaluation und/oder einer weiteren Vorhersage, bei einer weiteren Teilauswertung abgerufen wird, wenn die frühere und die weitere Teilauswertung übereinstimmen und/oder ähnlich und/oder gleichartig sind. Mit anderen Worten kann es möglich sein, dass Teilergebnisse persistent oder zwischengespeichert werden, um sie bei späteren Auswertungen weiterverwenden zu können. Hierdurch kann Rechenzeit gespart werden und damit eine schnelle Verarbeitung erfolgen.

Auch kann es möglich sein, dass die Messgröße an einem ersten Bereich, insbesondere einem ersten Messort und/oder Ort, liegt, und die Messung zu Ermittlung der Messinformation durch eine Erfassung einer weiteren Messgröße vorliegt, welche an einem zweiten Bereich, insbesondere Ort und/oder Messort, liegt, welcher sich von dem ersten Bereich unterscheidet und vorzugsweise beabstandet von diesem ist. Bevorzugt kann der Abstand zwischen dem ersten Bereich und dem zweiten Bereich mindestens 2 mm oder mindestens 5 mm oder mindestens 10 mm oder mindestens 20 mm oder mindestens 1 cm oder mindestens 2 cm oder mindestens 5 cm betragen. Bevorzugt unterscheidet sich die Temperatur am ersten Bereich von der Temperatur am zweiten Bereich um mindesten 0,1 °C oder um mindestens 0,5 °C oder um mindestens 1 °C oder um mindestens 2 °C oder um mindestens 5 °C oder um mindestens 10 °C oder um mindestens 100 °C. Bevorzugt ist dabei ausschließlich am zweiten Bereich ein Sensor zur Durchführung der Messung vorgesehen, sodass insbesondere am ersten Bereich auf einen Sensor verzichtet werden kann. Der Grund hierfür ist bspw., dass der erste Bereich schwer zugänglich ist und ein Anordnen eines Sensors in diesem ersten Bereich hohe Herstellungskosten sowie eine komplexe Montage verursachen würde. Entsprechend wird der Vorteil erzielt, dass die Montage und der Aufbau zur Durchführung der Messung vereinfacht werden kann.

Des Weiteren kann es möglich sein, dass die Messgröße eine Temperatur im Inneren eines Ofens, insbesondere eines Backofens, oder im Inneren einer Mikrowelle (diese Option ist nicht Teil der Erfindung) oder im Inneren eines Rührgefäßes einer Küchenmaschine ist, bevorzugt der Temperatur an der Oberfläche des Bodens des Rührgefäßes oder des Ofens oder der Mikrowelle. Auch kann es möglich sein, dass die Messgröße eine Temperatur in einem ersten Bereich ist. Besonders bevorzugt ist die Temperatur nur schwierig zu ermitteln, da der erste Bereich bspw. schwer zugänglich ist und/oder dort keine Sensoren vorgesehen sind. Anhand des erfindungsgemäßen Verfahrens kann dann der wahre Wert dieser Messgröße geschätzt werden. Dies hat den Vorteil, dass die Kosten für die Herstellung und die Montage vereinfacht werden.

Ebenfalls kann es vorgesehen sein, dass die Messung zur Ermittlung der Messinformation durch einen Sensor der Küchenmaschine und/oder eines Ofens erfolgt, welcher vorzugsweise beabstandet zu einer Oberfläche eines Bodens eines Rührgefäßes der Küchenmaschine (bzw. eines Bodens eines Garraums des Ofens) angeordnet ist, und bevorzugt im Inneren des Bodens oder außerhalb des Rührgefäßes (bzw. Garraums) im Bereich eines Heizelements der Küchenmaschine (bzw. des Ofens) angeordnet ist. Alternativ oder zusätzlich ist es denkbar, dass zur Ermittlung der Messinformation ein temperaturabhängiger Widerstand, vorzugsweise ein NTC-Widerstand (NTC = negative temperature coefficient), insbesondere eines Sensors, ausgewertet wird. Hierdurch werden die Kosten für die Durchführung der Messung stark verringert und außerdem die Gewährleistung einer zuverlässigen und sicheren Messung erzielt.

Es kann des Weiteren möglich sein, dass eine Betriebsinformation dadurch ermittelt wird, dass ein Betriebszustand eines Heizelements erfasst wird. Hierzu wird bspw. ein elektrischer Strom überwacht, welcher zum Steuern und/oder zum Betrieb des Heizelements genutzt wird. Auch kann es möglich sein, dass die Betriebsinformation dadurch ermittelt wird, dass ein weiterer Sensor vorgesehen ist und ausgewertet wird. Vorzugsweise wird durch die Betriebsinformation angegeben, ob das Heizelement aktiviert ist oder deaktiviert ist. Hierdurch kann bspw. die Vorhersage und/oder das Modell parametrisiert werden, um ein zuverlässigeres Ergebnis zu erhalten.

Ebenfalls ist es denkbar, dass bei der Durchführung der Messung noch weitere Messinformationen ermittelt werden, vorzugsweise eine Art und/oder eine Temperatur eines zubereiteten Lebensmittels und/oder ein Inhalt eines Rührgefäßes einer Küchenmaschine und/oder ein Gewicht an der Küchenmaschine und/oder eine visuelle Information über das Lebensmittel und/oder den Innenraum des Rührgefäßes und/oder weitere Parameter an der Küchenmaschine, insbesondere ein Motorstrom eines Rührwerks der Küchenmaschine. Hierzu können bspw. weitere Sensoren vorgesehen sein, insbesondere eine Waage und/oder ein Kamerasensor und/oder ein akustischer Sensor und/oder dergleichen. Diese weiteren Messinformationen können dabei bspw. zur Parametrisierung der Prüfung gemäß Schritt b) und/oder der Vorhersage und/oder des Modells dienen. Somit kann die Zuverlässigkeit der Vorhersage und der Schätzung weiter erhöht werden.

Auch kann es möglich sein, dass die Schritte a) bis c) zumindest teilweise echtzeitfähig während der zeitlichen Veränderung der Messgröße, vorzugsweise während des Betriebs einer Küchenmaschine (oder Ofens), durchgeführt werden. Insbesondere ist es vorgesehen, dass die Durchführung der Schritte a) und/oder b) und/oder c), insbesondere die Durchführung der Vorhersage und/oder der Gewichtung und/oder der Schätzung, maximal innerhalb einer Dauer von 1 µs oder 10 µs oder 0,1 ms oder 1 ms oder 10 ms oder 100 ms oder 1 s erfolgt. Damit kann sichergestellt werden, dass die Messgröße zuverlässig überwacht werden kann.

Weiter kann es möglich sein, dass anhand der Schätzung des wahren Wertes der Messgröße eine Überwachung der Messgröße erfolgt. Die Überwachung erfolgt bspw. derart, dass in Abhängigkeit von einem Schätzwert der Schätzung eine Steuerung und/oder Regelung erfolgt (insbesondere die Ansteuerung der Küchenmaschine bzw. des Ofens), bspw. die Ansteuerung des Heizelements. Unter dem Begriff Ansteuerung wird dabei im Rahmen der Erfindung auch eine Regelung verstanden. Insbesondere ist vorgesehen, dass wenn das Schätzungsergebnis einen Schwellenwert unterschreitet oder überschreitet, das Heizelement aktiviert bzw. deaktiviert wird. Dies ermöglicht eine zuverlässige Steuerung und/oder Kontrolle der Temperatur im Innenraum des Gefäßes.

Optional kann es möglich sein, dass der oder die Systemparameter jeweils als zumindest einer der folgenden Parameter ausgeführt ist bzw. sind, insbesondere welche während der Durchführung der Schritte a) bis c) unbekannt sind:
- Eine spezifische Wärmekapazität, insbesondere einer Heizplatte, insbesondere der Küchenmaschine,
- eine Leistung eines Heizelements, vorzugsweise der Küchenmaschine,
- ein Wärmeübergangskoeffizient, welcher vorzugsweise von einem Inhalt eines Rührgefäßes der Küchenmaschine abhängig ist,
- eine Masse der Heizplatte des Heizelements.

Dies hat den Vorteil, dass auf eine aufwendige Bestimmung der Systemparameter verzichtet werden kann.

Ferner kann es möglich sein, dass die Systemparametervorschläge zumindest teilweise anhand von Zufallswerten bestimmt und/oder bereitgestellt werden. Hierzu ist bspw. ein Zufallsgenerator, insbesondere der Verarbeitungsvorrichtung, vorgesehen. Insbesondere ist es vorgesehen, dass sich die Systemparametervorschläge jeweils voneinander unterscheiden, sodass vorzugsweise keine gleichen Systemparametervorschläge vorgesehen sind. Hierdurch wird eine effiziente und schnelle Verarbeitung der Prüfung ermöglicht.

Des Weiteren kann es im Rahmen der Erfindung von Vorteil sein, wenn die Prüfung gemäß Schritt b), insbesondere die Evaluation, wiederholt mit mindestens 5 oder mindestens 10 oder mindestens 100 oder mindestens 1.000 Wiederholungen erfolgt, wodurch anhand der dabei sukzessiv verfeinerten Bewertung eine Annäherung an den wahren Wert bei der Schätzung erfolgt bzw. erfolgen kann, insbesondere dadurch, dass, insbesondere bei und/oder nach dem letzten Wiederholungsschritt, durch die Bewertung der Systemparametervorschlag ermittelt wird, welcher dem Systemparameter am nächsten kommt. Dabei ist es insbesondere vorgesehen, dass die Wiederholungen bzw. die Wiederholungsschritte zeitlich nacheinander durchgeführt werden, wobei bei jedem Wiederholungsschritt insbesondere gleichzeitig und/oder parallel die Prüfung und/oder Evaluation und/oder Vorhersage für unterschiedliche Informationspartikel und/oder Systemparametervorschläge erfolgt. Hierdurch wird eine besonders schnelle und zuverlässige Durchführung der Schritte des erfindungsgemäßen Verfahrens gewährleistet. Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind.

Es zeigen:
- Figur 1: eine schematische perspektivische Darstellung einer Küchenmaschine,
- Figur 2: eine weitere schematische Darstellung einer Küchenmaschine,
- Figur 3: ein schematischer Querschnitt durch ein Gefäß einer Küchenmaschine,
- Figur 4: eine schematische Darstellung zur Visualisierung eines erfindungsgemäßen Verfahrens,
- Figuren 5 - 11: schematische Darstellungen zur Visualisierung von Verfahrensschritten eines erfindungsgemäßen Verfahrens.

In den nachfolgenden Figuren werden für die gleichen technischen Merkmale auch von unterschiedlichen Ausführungsbeispielen die identischen Bezugszeichen verwendet.

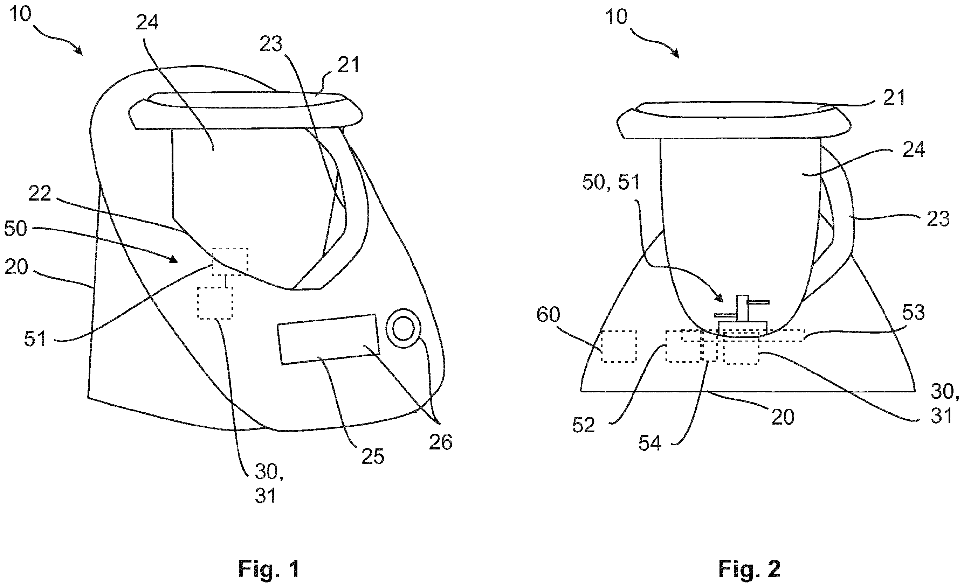

In Figuren 1 und 2 ist schematisch eine Küchenmaschine 10 gezeigt. Die Küchenmaschine 10 umfasst ein Gehäuse 20, welches eine Aufnahme 22 für ein Rührgefäß 24 aufweist. Das Rührgefäß 24 ist dabei bspw. durch einen Deckel 21 verschließbar und weist vorzugsweise einen Handgriff 23 auf. Ein Rührwerk 51 und/oder ein Heizelement 53, insbesondere mit einer Heizplatte 53.1, und/oder mindestens ein Sensor 52, vorzugsweise ein Temperatursensor 52, ist vorzugsweise im Bereich des Rührgefäßes 24 angeordnet. Insbesondere ist dabei das Rührwerk 51, insbesondere ein Messer, innerhalb des Rührgefäßes 24 angeordnet. Bevorzugt ist der Sensor 52 außerhalb des Innenraums des Rührgefäßes 24 angeordnet, z. B. im Bereich des Heizelements 53 oder der Heizplatte 53.1 oder am oder in einem Rührgefäßboden 24.1 des Rührgefäßes 24.

Weiter umfasst die Küchenmaschine ein Bedienfeld 26, welches bspw. ein Display 25, vorzugsweise einen Touchscreen 25, umfasst. Insbesondere dient dabei das Display 25 sowohl als Eingabe- als auch als Ausgabemittel. Über das Bedienfeld 26 wird dabei insbesondere ermöglicht, dass ein Bediener der Küchenmaschine 10 Zubereitungsparameter und/oder Betriebsparameter, wie z. B. die Rührwerksdrehzahl, die Heiztemperatur und/oder die Zeitdauer der Zubereitung, z. B. des Rührens, bei der Küchenmaschine 10 einstellen und/oder aktivieren und/oder deaktivieren kann. Weiter ist es auch denkbar, dass über das Bedienfeld 26 eine Art des Lebensmittelt eingestellt wird. Insbesondere können dabei diese Einstellungen und/oder Eingaben des Bedieners zur Bestimmung einer Messinformation 210.1 und/oder einer Betriebsinformation 210.2 dienen.

Auch kann es möglich sein, dass über das Display 25 eine Ausgabe von rezeptbezogenen Anweisungen oder Hinweisen und/oder grafischen Bedienelementen erfolgt. Über diese grafischen Bedienelemente, welche bevorzugt Bestandteile einer grafischen Benutzeroberfläche sind, kann als Eingabemittel eine Bedienung der Küchenmaschine 10 durchgeführt werden. Auch ist es denkbar, dass über das Display 25 ein Schätzungsergebnis (Schätzwert) ausgegeben wird.

Es ist weiterhin in Figuren 1 und 2 dargestellt, dass die Küchenmaschine 10 zumindest eine Bearbeitungsvorrichtung 50 umfasst, welche vorzugsweise zumindest ein Bearbeitungswerkzeug 51, wie ein Rührwerk 51, aufweist. Auch kann es vorgesehen sein, dass die Küchenmaschine 10 eine Verarbeitungsvorrichtung 60 aufweist, welche z. B. Elektronikkomponenten umfasst und/oder einen Datenspeicher umfasst. Ebenfalls kann die Küchenmaschine 10 weitere Bearbeitungsvorrichtungen 50 und/oder weitere Sensoren 52 und/oder eine Heizung 53 und/oder eine Waage 54 umfassen, welche jeweils z. B. in der Küchenmaschine 10 integriert sind. Die Waage 54 dient insbesondere dazu, eine Gewichtskraft auf das Rührgefäß 24 zu erfassen bzw. zu messen. Hierzu wird das Wegeobjekt bspw. auf und/oder in das Rührgefäß 24 gelegt und/oder eingefüllt. Ein Gewichtswert, welcher durch die Waage 54 ermittelt werden kann, kann bspw. auch zur Bestimmung der Messinformation 210.1 und/oder der Betriebsinformation 210.2 herangezogen werden. Die Heizung 53 ist bspw. derart ausgestaltet, dass das Lebensmittel im Rührgefäß 24 durch die Heizung 53 erhitzt werden kann, vorzugsweise bis auf Temperaturen in einem Bereich von10 °C bis 150 °C, vorzugsweise 30 °C bis 120 °C.

Weiter ist in Figur 2 schematisch ein Antrieb 30 der Küchenmaschine 10 gezeigt, welcher einen elektrischen Motor 31 aufweist. Dabei ist der Antrieb 30 und/oder der Motor 31 derart mit zumindest einer Bearbeitungsvorrichtung 50 und/oder mit zumindest einem Bearbeitungswerkzeug 51, insbesondere einem Rührwerk 51, verbunden, dass eine Kraftübertragung von dem Motor 31 und/oder einer Antriebswelle des Antriebs 30 an die Bearbeitungsvorrichtung 50 und/oder das Bearbeitungswerkzeug 51 und/oder das Rührwerk 51 durchgeführt wird.

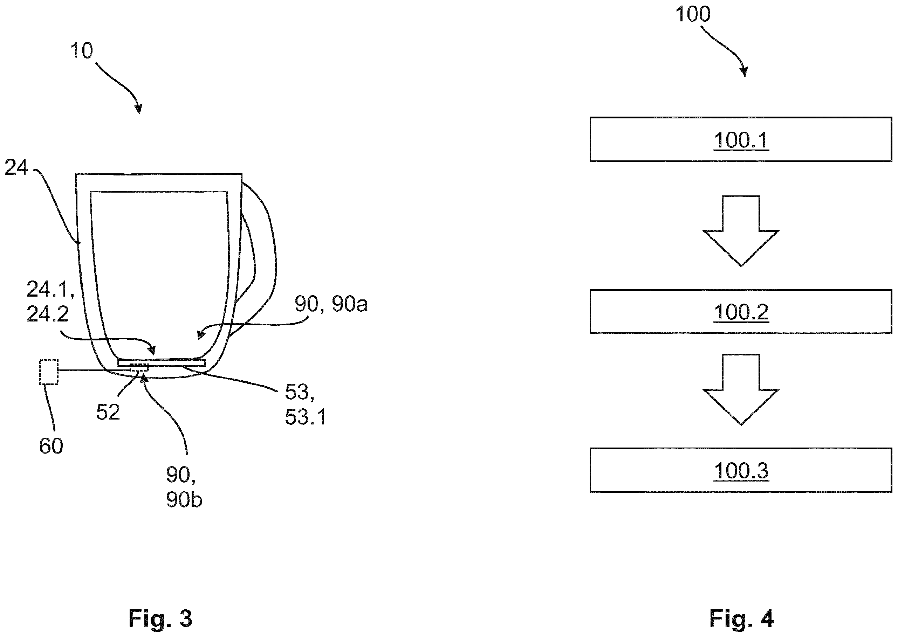

Weiter ist in Figur 3 schematisch eine Schnittansicht durch ein Rührgefäß 24 einer Küchenmaschine 10 gezeigt. Es ist erkennbar, dass am Rührgefäß 24 oder im Rührgefäß 24 ein Heizelement 53 vorgesehen ist, welches z. B. eine Heizplatte 53.1 umfasst. Dabei dient das Heizelement 53 und/oder die Heizplatte 53.1 insbesondere dazu, einen Innenraum bzw. einen Inhalt des Innenraums des Rührgefäßes 24 zu erhitzen, wobei insbesondere die Heizplatte 53.1 und/oder das Heizelement 53 nicht in direkten Kontakt mit dem Inhalt des Rührgefäßes 24 kommt. Somit ist bspw. zwischen dem Heizelement 53 und/oder der Heizplatte 53.1 und dem Innenraum bzw. dem Inhalt des Rührgefäßes 24 eine Oberfläche 24.2 eines Rührgefäßbodens 24.1 angeordnet. Bevorzugt verdeckt dabei diese Oberfläche 24.2 das Heizelement 53 und/oder die Heizplatte 53.1 und/oder einen Sensor 52 vollständig derart und/oder trennt diese räumlich vollständig derart von einem Inhalt und/oder einem Innenraum des Rührgefäßes 24, dass der Inhalt des Rührgefäßes 24 nicht in Kontakt mit dem Heizelement 53 und/oder der Heizplatte 53.1 und/oder dem Sensor 52 kommen kann. Insbesondere ist dazu der Sensor 52 und/oder das Heizelement 53 und/oder die Heizplatte 53.1 unterhalb der Oberfläche 24.2 im Rührgefäßboden 24.1 oder außerhalb des Rührgefäßbodens 24.1 angeordnet. Es sind verschiedene Bereiche 90, vorzugsweise mit unterschiedlichen Temperaturen vorgesehen. Insbesondere liegt im Innenraum des Rührgefäßes 24 und/oder an der Oberfläche 24.2 des Rührgefäßbodens 24.1 ein erster Bereich 90a, an welchem die Messgröße liegt. Vorzugsweise ist im Bereich des Sensors 52 und/oder im Bereich des Heizelements 53 und/oder im Bereich der Heizplatte 53.1 und/oder innerhalb des Rührgefäßbodens 24.1 ein zweiter Bereich 90b vorgesehen, in welchem die Erfassung einer weiteren Messgröße durch eine Messung 130 zur Ermittlung einer Messinformation 210.1 erfolgt. Zur Durchführung des erfindungsgemäßen Verfahrens 100 ist dabei bspw. der Sensor 52 mit einer Verarbeitungsvorrichtung 60 elektrisch verbunden, um insbesondere über diese elektrische Verbindung die Messinformation 210.1 zu übertragen. Auch kann es vorgesehen sein, dass die Verarbeitungsvorrichtung 60 elektrisch mit dem Heizelement 53 verbunden ist, um die Betriebsinformation 210.2 elektrisch zu übertragen.

In Figur 4 werden schematisch die Verfahrensschritte eines erfindungsgemäßen Verfahrens 100 visualisiert. Das Verfahren 100 dient dabei insbesondere zur Schätzung 150 einer zeitlich veränderbaren Messgröße eines Systems, nämlich einer Temperatur in einem Gefäß, vorzugsweise dem Rührgefäß 24, einer Küchenmaschine 10 zur zumindest teilweise automatischen Zubereitung von Lebensmitteln. Dabei wird durch eine Messung mindestens eine Messinformation 210.1 ermittelt, welche sich zumindest in Abhängigkeit von mindestens einem Systemparameter 230 von dem wahren Wert der Messgröße unterscheidet. Es werden dabei die Verfahrensschritte 100.1, 100.2, 100.3 durchgeführt, um die Schätzung des wahren Werts zu ermöglichen. Gemäß einem ersten Verfahrensschritt 100.1 wird eine Mehrzahl von Systemparametervorschlägen bereitgestellt, welche sich jeweils voneinander unterscheiden, und jeweils einen Vorschlag für mindestens einen der Systemparameter umfassen. Gemäß einem zweiten Verfahrensschritt 100.2 werden die Systemparametervorschläge (jeweils) geprüft, wobei ein wiederholtes Durchführen der Messung und ein Gewichten anhand der dabei ermittelten Messinformationen 210.1 erfolgt, sodass eine Bewertung der Systemparametervorschläge bereitgestellt wird. Gemäß einem dritten Verfahrensschritt 100.3 wird die Schätzung durchgeführt, und zwar anhand mindestens eines der Systemparametervorschläge unter Berücksichtigung der Bewertung.

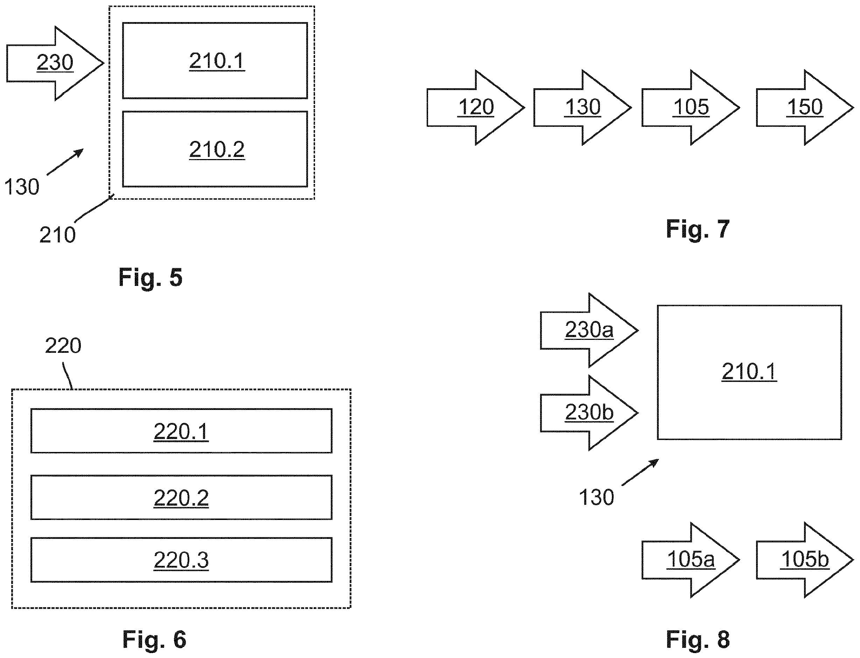

In Figur 5 ist gezeigt, dass der mindestens eine Systemparameter 230 Einfluss auf eine Messinformation 210.1 hat, da sich diese in Abhängigkeit von dem Systemparameter 230 von dem wahren Wert der Messgröße unterscheidet. Auch kann es vorgesehen sein, dass der Systemparameter 230 keinen Einfluss auf eine Betriebsinformation 210.2 hat, sodass die Betriebsinformation 210.2, z. B. eine Steuerungsinformation 210.2 der Küchenmaschine, unabhängig von dem Systemparameter 230 ist. Dies ist z. B. der Fall, wenn die Betriebsinformation 210.2 angibt, ob ein Heizelement 53 aktiviert oder deaktiviert ist. Dies hängt bspw. von einer Benutzereingabe und/oder einer Benutzervorgabe (z. B. einer Temperatureinstellung) ab. Die Messinformation 210.1 und/oder die Betriebsinformation 210.2 können dann bspw. bei einer Messung 130 ermittelt werden. Insbesondere dienen dabei die Messinformation 210.1 und/oder die Betriebsinformation 210.2 als Eingabeinformation 210 für eine Prüfung der Systemparametervorschläge und/oder für eine Durchführung der Schätzung 150.

In Figur 6 ist schematisch der Aufbau eines Informationspartikels 220 dargestellt. Dabei umfasst der Informationspartikel 220 zumindest eine Partikelsysteminformation 220.1, zumindest eine Partikelvorhersageinformation 220.2 und zumindest eine Partikelgewichtungsinformation 220.3. Diese können jeweils einzeln bestimmt und/oder verändert werden, insbesondere unabhängig voneinander.

Gemäß Figur 7 wird beispielhaft die Durchführung eines erfindungsgemäßen Verfahrens 100 gezeigt. Dabei erfolgt zunächst eine Vorhersage 120 einer (zunächst noch) unbekannten zukünftigen Messinformation 210.1 für jeden der Informationspartikel 220, sodass die jeweilige Partikelvorhersageinformation 220.2 bestimmt wird, wobei die jeweilige Vorhersage 120 in Abhängigkeit von der Partikelsysteminformation 220.1 des jeweiligen Informationspartikels 220 durchgeführt wird. Anschließend kann es vorgesehen sein, dass die Messung 130 durchgeführt wird, sodass die Messinformation 210.1 bestimmt wird. Dann wird eine Evaluierung 105 der Systemparametervorschläge durchgeführt, insbesondere durch einen Vergleich der bestimmten Partikelvorhersageinformationen 220.2 mit der bestimmten Messinformation 210.1, sodass die Bewertung der Systemparametervorschläge erfolgt. Die Vorhersage 120 und/oder die Messung 130 und/oder die Evaluation 105 können dann einige Male wiederholt werden, um einen möglichst aussichtsreichen Kandidaten der Systemparametervorschläge anhand der Bewertung zu ermitteln. Anschließend kann eine Schätzung 150 anhand des durch die Bewertung bestimmten aussichtsreichsten Kandidaten erfolgen.

In Figur 8 ist dargestellt, dass auch unterschiedliche Systemparameter vorgesehen sein können, z. B. ein erster Systemparameter 230a und ein zweiter Systemparameter 230b, und selbstverständlich noch einige weitere Systemparameter 230. Sämtliche Systemparameter 230 haben dabei Einfluss auf eine Messinformation 210.1. Es kann dabei möglich sein, dass für eine erste Auswahl von Systemparametern 230, z. B. für erste Systemparameter 230a, eine erste Evaluation 105a durchgeführt wird. Auch ist es denkbar, dass für eine weitere Auswahl von Systemparametern 230, z. B. für zweite Systemparameter 230b, eine zweite Evaluation 105b durchgeführt wird, welche bevorzugt erst nach der (z. B. auch wiederholten) Durchführung der ersten Evaluation 105a, durchgeführt wird. Auch kann zunächst eine (wiederholte) Prüfung anhand erster Systemparametervorschläge für erste Systemparameter 230a und anschließend eine (wiederholte) zweite Prüfung für zweite Systemparametervorschläge für zweite Systemparameter 230b erfolgen. Dieses Vorgehen ermöglicht, auch komplexe Modelle zur Schätzung 150 nutzen zu können.

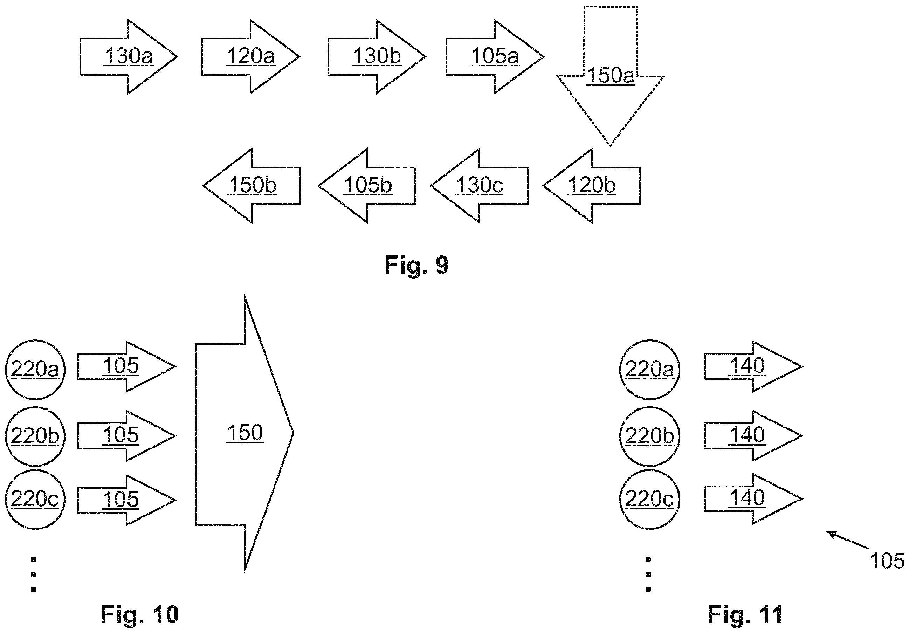

Die wiederholte Durchführung der Prüfung der Systemparametervorschläge wird weiter anhand Figur 9 verdeutlicht. So ist gezeigt, dass bspw. (insbesondere noch vor der ersten Prüfung der Systemparametervorschläge) eine erste Messung 130a erfolgt, um mindestens eine Messinformation 210.1 zu ermitteln. Anschließend werden die Systemparametervorschläge dadurch geprüft, dass zunächst eine erste Vorhersage 120a anhand der jeweiligen Systemparametervorschläge, dann eine zweite Messung 130b und anschließend eine Evaluierung 105a durchgeführt wird. Bei der ersten Evaluierung 105a wird insbesondere die bei der ersten Vorhersage 120a bestimmte Partikelvorhersageinformation 220.2 mit der bei der zweiten Messung 130b bestimmten Messinformation 210.1 verglichen, sodass die Bewertung der Systemparametervorschläge erfolgen kann. Die Bestimmung der Partikelvorhersageinformation 220.2 bei der ersten Vorhersage 120a wurde bspw. anhand der bei der ersten Messung 130a bestimmten Messinformation 210.1 bestimmt. Nach der Bewertung kann z. B. eine erste Schätzung 150a erfolgen, wobei dieser Schritt auch übersprungen werden kann. So kann es alternativ auch vorgesehen sein, dass erst nach der wiederholten Durchführung der Prüfung eine Schätzung 150 erfolgt. Zur wiederholten Durchführung der Prüfung wird dann bei jedem Wiederholungsschritt erneut eine Vorhersage 120 und eine Messung 130 sowie eine Evaluation 105 durchgeführt. So kann bspw. eine zweite Vorhersage 120b durchgeführt werden, anschließend eine dritte Messung 130c durchgeführt werden und in Abhängigkeit von der zweiten Vorhersage 120b und der dritten Messung 130c eine zweite Evaluation 105b durchgeführt werden. Nach der letzten Wiederholung bzw. dem letzten Wiederholungsschritt, z. B. nach 10 bis 100 (oder 1.000) Wiederholungsschritten, kann die Schätzung 150 bzw. eine zweite Schätzung 150b erfolgen.

In den Figuren 10 und 11 ist gezeigt, dass auch eine parallele Verarbeitung der jeweiligen einzelnen Informationspartikel 220 in jedem Wiederholungsschritt erfolgen kann. Hierzu wird bspw. für einen ersten Informationspartikel 220a und für einen zweiten Informationspartikel 220b und für einen dritten Informationspartikel 220c jeweils eine Evaluation 105 durchgeführt, sodass basierend auf diesen Evaluationen 105 eine (z. B. einzige) Schätzung 150 stattfinden kann. Anhand Figur 11 wird deutlich, dass bei den jeweiligen Evaluationen 105 jeweils auch eine Gewichtungsentscheidung 140 für jeden der Informationspartikel 220 erfolgt.

### Bezugszeichenliste

- 10: Küchenmaschine
- 20: Gehäuse
- 21: Deckel
- 22: Rührgefäß-Aufnahme
- 23: Handgriff
- 24: Rührgefäß, Gefäß
- 24.1: Rührgefäßboden
- 24.2: Oberfläche des Rührgefäßbodens
- 25: Display
- 26: Bedienfeld
- 30: Antrieb
- 31: Motor
- 50: Bearbeitungsvorrichtung
- 51: Bearbeitungswerkzeug, Rührwerk
- 52: Sensor, Temperatursensor
- 53: Heizelement
- 53.1: Heizplatte
- 54: Waage
- 60: Verarbeitungsvorrichtung
- 90: Bereich, Messort
- 90a: erster Bereich, erster Messort
- 90b: zweiter Bereich, zweiter Messort

- 100: Verfahren
- 100.1: erster Verfahrensschritt
- 100.2: zweiter Verfahrensschritt
- 100.3: dritter Verfahrensschritt
- 105: Evaluation
- 105a: erste Evaluation
- 105b: zweite Evaluation
- 120: Vorhersage
- 120a: erste Vorhersage
- 120b: zweite Vorhersage
- 130: Messung
- 130a: erste Messung
- 130b: zweite Messung
- 130c: dritte Messung
- 140: Gewichtungsentscheidung
- 150: Schätzung
- 150a: erste Schätzung
- 150b: zweite Schätzung

- 210: Eingabeinformation
- 210.1: Messinformation
- 210.2: Betriebsinformation, Steuerungsinformation
- 220: Informationspartikel
- 220.1: Partikelsysteminformation, Systemmodellinformation
- 220.2: Partikelvorhersageinformation
- 220.3: Partikelgewichtungsinformation
- 220a: erster Informationspartikel
- 220b: zweiter Informationspartikel
- 220c: dritter Informationspartikel
- 230: Systemparameter
- 230a: erste Systemparameter
- 230b: zweite Systemparameter

## Patentansprüche

1. Verfahren (100) zur Schätzung (150) einer zeitlich veränderbaren Messgröße eines Systems, wobei es sich bei der Messgröße um eine Innentemperatur eines Gefäßes (24) einer Küchenmaschine (10) zur zumindest teilweise automatischen Zubereitung von Lebensmitteln oder um eine Innentemperatur eines Innenraums eines Ofens (10) handelt, wobei durch eine Messung (130) mindestens eine Messinformation (210.1) ermittelt wird, welche sich zumindest in Abhängigkeit von mindestens einem Systemparameter (230) von dem wahren Wert der Messgröße unterscheidet, wobei für die Schätzung (150) des wahren Wertes die nachfolgenden Schritte durchgeführt werden:
a) Bereitstellen von mehreren Systemparametervorschlägen, welche sich jeweils voneinander unterscheiden, und jeweils einen Vorschlag für mindestens einen der Systemparameter (230) umfassen,
b) Prüfen der Systemparametervorschiäge, wobei ein wiederholtes Durchführen der Messung (130) und ein Gewichten anhand der dabei ermittelten Messinformationen (210.1) erfolgt, sodass eine Bewertung der Systemparametervorschläge bereitgestellt wird,
c) Durchführen der Schätzung (150) anhand mindestens eines der Systemparametervorschläge unter Berücksichtigung der Bewertung.
wobei durch eine wiederholte Durchführung der Prüfung gemäß Schritt b) eine sequenzielle Anpassung der Bewertung erfolgt, **dadurch gekennzeichnet, dass** bei jedem Wiederholungsschritt die Bewertung unter Berücksichtigung vorangegangener Bewertungen und anhand der beim Wiederholungsschritt ermittelten Messinformation (210.1) angepasst wird, sodass anhand der Gewichtung der optimale Systemparametervorschlag ermittelt wird, insbesondere welcher die höchste Relevanz für den tatsächlichen Systemparameter (230) aufweist, um ein optimales Schätzungsergebnis für den wahren Wert der Messgröße zu erhalten.

2. Verfahren (100) nach Anspruch 1,
**dadurch gekennzeichnet,**
**dass** die Systemparametervorschläge jeweils einem Informationspartikel (220) zugeordnet sind, für welchen wenigstens die nachfolgenden Informationen bereitgestellt werden können:
- eine Partikelsysteminformation (220.1), welche zumindest den jeweiligen Systemparametervorschlag umfasst,
- eine Partikelvorhersageinformation (220.2) zur Bereitstellung eines vorhergesagten Wertes einer zukünftigen Messinformation (210.1), wobei der vorhergesagte Wert für den jeweiligen Systemparametervorschlag spezifisch ist,
- eine Partikelgewichtungsinformation (220.3) zur Bereitstellung der Bewertung des jeweiligen Systemparametervorschlags.

3. Verfahren (100) nach Anspruch 2,
**dadurch gekennzeichnet,**
**dass** zum Prüfen gemäß Schritt b) die nachfolgenden Schritte durchgeführt werden, vorzugsweise zeitlich nacheinander und/oder wiederholt und/oder iterativ, sodass bevorzugt der zeitliche Verlauf der Messinformation (210.1) bestimmt wird:
- Durchführen einer Vorhersage (120) der unbekannten zukünftigen Messinformation (210.1) für jeden der Informationspartikel (220), sodass die jeweilige Partikelvorhersageinformation (220.2) bestimmt wird, wobei die jeweilige Vorhersage (120) in Abhängigkeit von der Partikelsysteminformation (220.1) des jeweiligen Informationspartikels (220) durchgeführt wird,
- Durchführen der Messung (130), sodass die Messinformation (210.1) bestimmt wird,
- Evaluieren (105) der Systemparametervorschläge durch einen Vergleich der bestimmten Partiketvorhersageinformationen (220.2) mit der bestimmten Messinformation (210.1), sodass die Bewertung der Systemparametervorschläge erfolgt,
- Gewichten anhand der erfolgten Bewertung.

4. Verfahren (100) nach Anspruch 2 oder 3,
**dadurch gekennzeichnet,**
**dass** zum Gewichten, insbesondere gemäß Schritt b), die nachfolgenden Schritte zeitlich nacheinander durchgeführt werden, wobei vorzugsweise Schritt b) wiederholt und/oder iterativ durchgeführt wird, sodass insbesondere nach der Gewichtung erneut die Prüfung gemäß Schritt b) durchgeführt wird:
- Durchführen einer Gewichtungsentscheidung (140) anhand einer Evaluation (105), vorzugsweise anhand der erfolgten Bewertung, und besonders bevorzugt auch anhand der Partikelgewichtungsinformationen (220.3), wenn diese bereits zuvor bestimmt wurden,
- Bestimmen der Partikelgewichtungsinformationen (220.3) in Abhängigkeit von der Gewichtungsentscheidung (140), sodass die Bewertung der Systemparametervorschläge bereitgestellt wird.

5. Verfahren (100) nach einem der Ansprüche 2 bis 4,
**dadurch gekennzeichnet,**
**dass** bei der Durchführung der Messung (130) auch eine Betriebsinformation (210.2), vorzugsweise Steuerungsinformation (210.2), ermittelt wird, vorzugsweise weiche von einem Betrieb, insbesondere einer Ansteuerung, einer Küchenmaschine (10) abhängig ist, und/oder einen steuerbaren Einfluss auf die Messgröße hat, wobei die jeweilige Vorhersage (120) in Abhängigkeit von
- der Betriebsinformation (210.2) und/oder der letzten ermittelten Messinformation (210.1), sowie
- der Partikelsysteminformation (220.1) des jeweiligen Informationspartikels (220) durchgeführt wird.

6. Verfahren (100) nach einem der Ansprüche 2 bis 5,
**dadurch gekennzeichnet,**
**dass** bei der Durchführung der Vorhersage (120) die nachfolgenden Schritte durchgeführt werden:
- Schätzen (150) eines Zustands des Systems, insbesondere eines dynamischen Prozesses des Systems, wobei das Schätzen (150) anhand eines, insbesondere stochastischen, Modells in Abhängigkeit von der Partikelsysteminformation (220.1) des jeweiligen Informationspartikels (220) erfolgt, und insbesondere anhand der Steuerungsinformation (210.2) und/oder der letzten ermittelten Messinformation (210.1) erfolgt,
- Bestimmen der Partikelvorhersageinformation (220.2) in Abhängigkeit von dem geschätzten Zustand.

7. Verfahren (100) nach einem der vorhergehenden Ansprüche,
**dadurch gekennzeichnet,**
**dass** zumindest eine erste Auswahl von unterschiedlichen ersten Systemparametern (230a) und eine zweite Auswahl von unterschiedlichen zweiten Systemparametern (230b) vorgesehen ist, wobei sich die ersten Systemparameter (230a) von den zweiten Systemparametern (230b) unterscheiden, und wobei bei Schritt b) für die ersten Systemparameter (230a) eine erste Prüfung und für die zweiten Systemparameter (230b) eine zweite Prüfung durchgeführt wird, welche vorzugsweise mit jeweils unterschiedlicher Gewichtungslogik durchgeführt werden, wobei anschließend in Abhängigkeit von der ersten und zweiten Prüfung eine Gesamtbewertung für sämtliche Systemparameter (230) erfolgt
und/oder dass mindestens 3 oder mindestens 5 oder mindestens 7 oder mindestens 10 unterschiedliche und unbekannte Systemparameter (230) vorgesehen sind.

8. Verfahren (100) nach einem der vorhergehenden Ansprüche,
**dadurch gekennzeichnet,**
**dass** bei der Prüfung gemäß Schritt b), vorzugsweise bei der Evaluation (105), bevorzugt bei der Vorhersage (120), mindestens ein Teilergebnis bei wenigstens einer früheren Teilauswertung ermittelt und gespeichert wird, sodass das Teilergebnis bei einer weiteren Prüfung, insbesondere weiteren Evaluation (105) und/oder Vorhersage (120), bei einer weiteren Teilauswertung abgerufen wird, wenn die frühere und die weitere Teilauswertung übereinstimmen und/oder ähnlich und/oder gleichartig sind.

9. Verfahren (100) nach einem der vorhergehenden Ansprüche,
**dadurch gekennzeichnet,**
**dass** die Messgröße an einem ersten Messort (90a) liegt, und die Messung (130) zur Ermittlung der Messinformation (210.1) durch eine Erfassung einer weiteren Messgröße erfolgt, welche an einem zweiten Messort (90b) liegt, welcher sich von dem ersten Messort (90a) unterscheidet und vorzugsweise beabstandet von diesem ist
und/oder dass die Messgröße die Temperatur an der Oberfläche (24.2) des Bodens (24.1) des Rührgefäßes (24) ist.

10. Verfahren (100) nach einem der vorhergehenden Ansprüche,
**dadurch gekennzeichnet,**
**dass** die Messung (130) zur Ermittlung der Messinformation (210.1) durch einen Sensor (52) einer Küchenmaschine (10) erfolgt, welcher beabstandet zur einer Oberfläche (24.2) eines Bodens (24.1) eines Rührgefäßes (24) der Küchenmaschine (10) angeordnet ist, und vorzugsweise im Inneren des Bodens (24.1) oder außerhalb des Rührgefäßes (24) im Bereich eines Heizelements (53) der Küchenmaschine (10) angeordnet ist und/oder dass zur Ermittlung der Messinformation (210.1) ein temperaturabhängiger Widerstand, vorzugsweise ein NTC-Widerstand, insbesondere eines Sensors (52), ausgewertet wird
und/oder dass eine Betriebsinformation (210.2) dadurch ermittelt wird, dass ein Betriebszustand eines Heizelements (53) erfasst wird.

11. Verfahren (100) nach einem der vorhergehenden Ansprüche,
**dadurch gekennzeichnet,**
**dass** bei der Durchführung der Messung (130) noch weitere Messinformationen (210.1) ermittelt werden, vorzugsweise eine Art und/oder eine Temperatur eines zubereiteten Lebensmittels und/oder ein Inhalt eines Rührgefäßes (24) einer Küchenmaschine (10) und/oder ein Gewicht an der Küchenmaschine (10) und/oder eine visuelle Information über das Lebensmittel und/oder den Innenraum des Rührgefäß (24) und/oder weitere Parameter an der Küchenmaschine (10), insbesondere ein Motorstrom eines Rührwerks (51) der Küchenmaschine (10).

12. Verfahren (100) nach einem der vorhergehenden Ansprüche,
**dadurch gekennzeichnet,**
**dass** die Schritte a) bis c) echtzeitfähig während der zeitlichen Veränderung der Messgröße, insbesondere während des Betriebs einer Küchenmaschine (10), durchgeführt werden
und/oder dass die Systemparametervorschläge (230) zumindest teilweise anhand von Zufallswerten bestimmt und/oder bereitgestellt werden.

13. Verfahren (100) nach einem der vorhergehenden Ansprüche,
**dadurch gekennzeichnet,**
**dass** der oder die Systemparameter (230) jeweils als zumindest einer der folgenden Parameter ausgeführt ist, insbesondere welche während der Durchführung der Schritte a) bis c) unbekannt sind:
- eine spezifische Wärmekapazität, insbesondere einer Heizplatte (53.1) einer Küchenmaschine (10),
- eine Leistung eines Heizelements (53), vorzugsweise der Küchenmaschine (10),
- ein Wärmeübergangskoeffizient, welcher vorzugsweise von einem Inhalt eines Rührgefäßes (24) der Küchenmaschine (10) abhängig ist,
- eine Masse der Heizplatte (53.1).

14. Verfahren (100) nach einem der vorhergehenden Ansprüche,
**dadurch gekennzeichnet,**
**dass** die Prüfung gemäß Schritt b), insbesondere die Evaluation (105), wiederholt mit mindestens 5 oder mindestens 10 oder mindestens 100 oder mindestens 1000 Wiederholungen erfolgt, wodurch anhand der dabei sukzessiv verfeinerten Bewertung eine Annäherung an den wahren Wert bei der Schätzung (150) erfolgt, insbesondere dadurch, dass durch die Bewertung der Systemparametervorschlag ermittelt wird, welcher dem Systemparameter (230) am nächsten kommt.

## Claims

1. Method (100) for an estimation (150) of a time-variable measured variable of a system, the measured variable being an internal temperature of a vessel (24) of a food processor (10) for at least partially automatic preparation of food or an internal temperature of an interior of an oven (10), wherein
at least one item of measurement information (210.1) is determined by a measurement (130), which item of measurement information differs from the true value of the measured variable at least as a function of at least one system parameter (230),
where for the estimation (150) of the true value, the following steps are performed:
a) Providing a plurality of system parameter suggestions, each of which is different from the other, and each of which comprises a suggestion for at least one of the system parameters (230),
b) Checking of the system parameter suggestions, whereby a repeated execution of the measurement (130) and a weighting on the basis of the measurement information (210.1) determined thereby takes place, so that an evaluation of the system parameter suggestions is provided,
(c) Perform the estimation (150) using at least one of the system parameter suggestions, taking into account the evaluation,
wherein by repeatedly performing the check according to step b) a sequential adjustment of the evaluation is performed,
**characterized in that**
at each repetition step, the evaluation is adjusted taking into account previous evaluations and on the basis of the measurement information (210.1) determined at the repetition step, so that, on the basis of the weighting, the optimum system parameter suggestion is determined, in particular which has the highest relevance for the actual system parameter (230), in order to obtain an optimum estimation result for the true value of the measured variable.

2. The method (100) according to claim 1,
**characterized in that,**
the system parameter suggestions are each assigned to an information particle (220) for which at least the following information can be provided:
- a particle system information (220.1) comprising at least the respective system parameter suggestion,
- a particle prediction information (220.2) for providing a predicted value of a future measurement information (210.1), wherein the predicted value is specific to the respective system parameter suggestion,
- a particle weighting information (220.3) to provide the evaluation of the respective system parameter suggestion.

3. The method (100) according to claim 2,
**characterized in that,**
for checking according to step b), the following steps are carried out, preferably one after the other in time and/or repeatedly and/or iteratively, so that preferably the time course of the measurement information (210.1) is determined:
- Performing a prediction (120) of the unknown future measurement information (210.1) for each of the information particles (220) such that the respective particle prediction information (220.2) is determined, wherein the respective prediction (120) is performed depending on the particle system information (220.1) of the respective information particle (220),
- Performing the measurement (130) so that the measurement information (210.1) is determined,
- Evaluating (105) the system parameter suggestions by comparing the determined particle prediction information (220.2) with the determined measurement information (210.1) so that the evaluation of the system parameter suggestions is performed,
- Weighting based on the evaluation made.

4. Method (100) according to claim 2 or 3,
**characterized in that,**
for weighting, in particular in accordance with step b), the subsequent steps are carried out one after the other in time, with step b) preferably being carried out repeatedly and/or iteratively, so that, in particular after the weighting, the checking in accordance with step b) is carried out again:
- Performing a weighting decision (140) on the basis of an evaluation (105), preferably on the basis of the evaluation performed, and particularly preferably also on the basis of the particle weighting information (220.3) if this has already been determined previously,
- Determining particle weighting information (220.3) as a function of the weighting decision (140) such that the evaluation of the system parameter suggestions is provided.

5. The method (100) according to any one of claims 2 to 4,
**characterized in that,**
when the measurement (130) is carried out, operating information (210.2), preferably control information (210.2), is also determined, preferably which is dependent on an operation, in particular a control, of a food processor (10), and/or has a controllable influence on the measured variable, the respective prediction (120) being made as a function of
- the operating information (210.2) and/or the last determined measurement information (210.1), and
- the particle system information (220.1) of the respective information particle (220) is carried out.

6. The method (100) according to any one of claims 2 to 5,
**characterized in that,**
in performing the prediction (120), the following steps are performed:
- Estimation (150) of a state of the system, in particular of a dynamic process of the system, the estimation (150) being carried out on the basis of a model, in particular a stochastic model, as a function of the particle system information (220.1) of the respective information particle (220), and in particular being carried out on the basis of the control information (210.2) and/or the last determined measurement information (210.1),
- Determine the particle prediction information (220.2) as a function of the estimated condition.

7. Method (100) according to any one of the preceding claims,
**characterized in that,**
at least a first selection of different first system parameters (230a) and a second selection of different second system parameters (230b) is provided, the first system parameters (230a) differing from the second system parameters (230b), and in which, in step b), a first check is carried out for the first system parameters (230a) and a second check is carried out for the second system parameters (230b), which are preferably each carried out with different weighting logic, an overall evaluation then being carried out for all the system parameters (230) as a function of the first and second check
and/or that at least 3 or at least 5 or at least 7 or at least 10 different and unknown system parameters (230) are provided.

8. Method (100) according to any one of the preceding claims,
**characterized in that,**
during the check according to step b), preferably during the evaluation (105), preferably during the prediction (120), at least one partial result is determined and stored during at least one earlier partial evaluation, so that the partial result is called up during a further check, in particular a further evaluation (105) and/or prediction (120), during a further partial evaluation if the earlier and the further partial evaluation correspond and/or are similar and/or of the same type.

9. Method (100) according to any one of the preceding claims,
**characterized in that,**
the measurement variable is located at a first measurement location (90a), and the measurement (130) for determining the measurement information (210.1) is carried out by detecting a further measurement variable which is located at a second measurement location (90b) which is different from the first measurement location (90a) and is preferably at a distance from the latter
and/or that the measured variable is the temperature at the surface (24.2) of the bottom (24.1) of the stirring vessel (24).

10. Method (100) according to any one of the preceding claims,
**characterized in that,**
the measurement (130) for determining the measurement information (210.1) is carried out by a sensor (52) of a food processor (10), which is arranged at a distance from a surface (24.2) of a base (24.1) of a mixing vessel (24) of the food processor (10), and is preferably arranged in the interior of the base (24.1) or outside the mixing vessel (24) in the region of a heating element (53) of the food processor (10)
and/or **in that** a temperature-dependent resistor, preferably an NTC resistor, in particular of a sensor (52), is evaluated to determine the measurement information (210.1)
and/or that an operating information (210.2) is determined by detecting an operation state of a heating element (53).

11. Method (100) according to any one of the preceding claims,
**characterized in that,**
further measurement information (210.1) is determined when the measurement (130) is carried out, preferably a type and/or a temperature of a prepared foodstuff and/or a content of a stirring vessel (24) of a food processor (10) and/or a weight at the food processor (10) and/or visual information about the foodstuff and/or the interior of the stirring vessel (24) and/or further parameters at the food processor (10), in particular a motor current of an agitator (51) of the food processor (10).

12. Method (100) according to any one of the preceding claims,
**characterized in that,**
the steps a) to c) are carried out in real time during the temporal change of the measured variable, in particular during the operation of a food processor (10) and/or **in that** the system parameter suggestions (230) are determined and/or provided at least in part on the basis of random values.

13. Method (100) according to any one of the preceding claims,
**characterized in that,**
the system parameter or parameters (230) is or are in each case implemented as at least one of the following parameters, in particular which are unknown during the execution of steps a) to c):
- a specific heat capacity, in particular of a heating plate (53.1) of a food processor (10),
- a power of a heating element (53), preferably of the food processor (10),
- a heat transfer coefficient, which is preferably dependent on a content of a stirring vessel (24) of the food processor (10),
- a mass of the heating plate (53.1).

14. Method (100) according to any one of the preceding claims,
**characterized in that,**
**in that** the check according to step b), in particular the evaluation (105), is carried out repeatedly with at least 5 or at least 10 or at least 100 or at least 1000 repetitions, as a result of which, on the basis of the evaluation successively refined in the process, an approximation to the true value in the estimation (150) is carried out, in particular **in that** the system parameter suggestion which comes closest to the system parameter (230) is determined by the evaluation.

## Revendications

1. Procédé (100) d'estimation (150) d'une grandeur de mesure variable dans le temps d'un système, la grandeur de mesure étant une température intérieure d'un récipient (24) d'un robot ménager (10) pour la préparation au moins partiellement automatique de produits alimentaires ou une température intérieure d'un espace intérieur d'un four (10), dans lequel
au moins une information de mesure (210.1) est déterminée par une mesure (130), laquelle se distingue de la valeur vraie de la grandeur de mesure au moins en fonction d'au moins un paramètre de système (230),
les étapes suivantes étant effectuées pour l'estimation (150) de la valeur vraie :
a) fournir une pluralité de propositions de paramètres de système, chacune étant différente des autres, et chacune comprenant une proposition pour au moins l'un des paramètres de système (230),
b) contrôler les propositions de paramètres du système, une exécution répétée de la mesure (130) et une pondération étant effectuées à l'aide des informations de mesure (210.1) ainsi déterminées, de sorte qu'une évaluation des propositions de paramètres du système est mise à disposition,
c) effectuer l'estimation (150) à partir d'au moins l'une des propositions de paramètres du système, en tenant compte de l'évaluation,
où par une exécution répétée du contrôle selon l'étape b) une adaptation séquentielle de l'évaluation est effectuée,
**caractérisé en ce que**
à chaque étape de répétition, l'évaluation est adaptée en tenant compte des évaluations précédentes et à l'aide de l'information de mesure (210.1) déterminée lors de l'étape de répétition, de sorte qu'à l'aide de la pondération, la proposition optimale de paramètre de système est déterminée, en particulier celle qui présente la plus grande pertinence pour le paramètre de système réel (230), afin d'obtenir un résultat d'estimation optimal pour la valeur vraie de la grandeur de mesure.

2. Procédé (100) selon la revendication 1,
**caractérisé en ce que,**
les propositions de paramètres de système sont respectivement associées à une particule d'information (220) pour laquelle au moins les informations suivantes peuvent être mises à disposition :
- une information de système de particules (220.1) qui comprend au moins la proposition de paramètre de système respective,
- une information de prédiction de particules (220.2) pour fournir une valeur prédite d'une information de mesure future (210.1), la valeur prédite étant spécifique à la proposition de paramètre de système respective,
- une information sur le poids des particules (220.3) pour fournir l'évaluation de la proposition de paramètre de système correspondante.

3. Procédé (100) selon la revendication 2,
**caractérisé en ce que,**
pour le contrôle selon l'étape b), les étapes suivantes sont exécutées, de préférence successivement dans le temps et/ou de manière répétée et/ou itérative, de sorte que l'évolution dans le temps de l'information de mesure (210.1) est déterminée de préférence :
- Effectuer une prédiction (120) de l'information de mesure future inconnue (210.1) pour chacune des particules d'information (220) de sorte que l'information de prédiction de particule respective (220.2) soit déterminée, la prédiction respective (120) étant effectuée en fonction de l'information de système de particule (220.1) de la particule d'information respective (220),
- L'exécution de la mesure (130), de sorte que l'information de mesure (210.1) est déterminée,
- Évaluer (105) les propositions de paramètres de système en comparant les informations de prédiction de particules déterminées (220.2) avec les informations de mesure déterminées (210.1), de sorte que l'évaluation des propositions de paramètres de système est effectuée,
- Pondération sur la base de l'évaluation effectuée.

4. Procédé (100) selon la revendication 2 ou 3,
**caractérisé en ce que,**
pour la pondération, en particulier selon l'étape b), les étapes suivantes sont exécutées successivement dans le temps, l'étape b) étant de préférence répétée et/ou exécutée de manière itérative, de sorte que, en particulier après la pondération, le contrôle selon l'étape b) est à nouveau exécuté :
- L'exécution d'une décision de pondération (140) sur la base d'une évaluation (105), de préférence sur la base de l'évaluation effectuée, et de manière particulièrement préférée également sur la base des informations sur les poids des particules (220.3), si celles-ci ont déjà été déterminées auparavant,
- Déterminer les informations sur les poids des particules (220.3) en fonction de la décision de pondération (140), de sorte que l'évaluation des propositions de paramètres du système soit fournie.

5. Procédé (100) selon l'une quelconque des revendications 2 à 4,
**caractérisé en ce que,**
lors de l'exécution de la mesure (130), on détermine également une information de fonctionnement (210.2), de préférence une information de commande (210.2), de préférence qui dépend d'un fonctionnement, en particulier d'une commande, d'un robot ménager (10), et/ou qui a une influence commandable sur la grandeur de mesure, la prédiction (120) respective étant déterminée en fonction de
- l'information de fonctionnement (210.2) et/ou de la dernière information de mesure déterminée (210.1), ainsi que
- des informations sur le système de particules (220.1) de la particule d'information (220) concernée
est effectuée.

6. Procédé (100) selon l'une quelconque des revendications 2 à 5,
**caractérisé en ce que,**
lors de l'exécution de la prédiction (120), les étapes suivantes sont exécutées :
- Estimation (150) d'un état du système, notamment d'un processus dynamique du système, l'estimation (150) s'effectuant à l'aide d'un modèle, notamment stochastique, en fonction de l'information de système de particules (220.1) de la particule d'information (220) respective, et s'effectuant notamment à l'aide de l'information de commande (210.2) et/ou de la dernière information de mesure (210.1) déterminée,
- Déterminer les informations de prédiction de particules (220.2) en fonction de l'état estimé.

7. Procédé (100) selon l'une quelconque des revendications précédentes,
**caractérisé en ce qu'**
il est prévu au moins une première sélection de premiers paramètres de système (230a) différents et une deuxième sélection de deuxièmes paramètres de système (230b) différents, les premiers paramètres de système (230a) se distinguant des deuxièmes paramètres de système (230b), et à l'étape b), un premier contrôle étant effectué pour les premiers paramètres de système (230a) et un deuxième contrôle étant effectué pour les deuxièmes paramètres de système (230b), lesquels sont effectués de préférence avec une logique de pondération respectivement différente, une évaluation globale étant ensuite effectuée pour tous les paramètres de système (230) en fonction du premier et du deuxième contrôle
et/ou **en ce qu'**il est prévu au moins 3 ou au moins 5 ou au moins 7 ou au moins 10 paramètres de système (230) différents et inconnus.

8. Procédé (100) selon l'une quelconque des revendications précédentes,
**caractérisé en ce que**
lors du contrôle selon l'étape b), de préférence lors de l'évaluation (105), de préférence lors de la prédiction (120), au moins un résultat partiel est déterminé et mémorisé lors d'au moins une évaluation partielle précédente, de sorte que le résultat partiel est appelé lors d'un autre contrôle, en particulier d'une autre évaluation (105) et/ou d'une autre prédiction (120), lors d'une autre évaluation partielle, si l'évaluation partielle précédente et l'autre évaluation partielle concordent et/ou sont similaires et/ou de même nature.

9. Procédé (100) selon l'une quelconque des revendications précédentes,
**caractérisé en ce que**
la grandeur de mesure se trouve en un premier lieu de mesure (90a), et la mesure (130) pour déterminer l'information de mesure (210.1) est effectuée par une détection d'une autre grandeur de mesure qui se trouve en un deuxième lieu de mesure (90b) qui est différent du premier lieu de mesure (90a) et de préférence distant de celui-ci et/ou **en ce que** la grandeur de mesure est la température à la surface (24.2) du fond (24.1) du récipient d'agitation (24).

10. Procédé (100) selon l'une quelconque des revendications précédentes,
**caractérisé en ce que**
la mesure (130) pour déterminer l'information de mesure (210.1) est effectuée par un capteur (52) d'un robot ménager (10), qui est disposé à distance d'une surface (24.2) d'un fond (24.1) d'un récipient d'agitation (24) du robot ménager (10), et qui est disposé de préférence à l'intérieur du fond (24.1) ou à l'extérieur du récipient d'agitation (24) dans la zone d'un élément chauffant (53) du robot ménager (10)
et/ou **en ce que**, pour déterminer l'information de mesure (210.1), une résistance dépendant de la température, de préférence une résistance NTC, en particulier d'un capteur (52), est évaluée
et/ou **en ce qu'**une information de fonctionnement (210.2) est déterminée par le fait qu'un état de fonctionnement d'un élément chauffant (53) est détecté.

11. Procédé (100) selon l'une quelconque des revendications précédentes,
**caractérisé en ce que**
lors de la réalisation de la mesure (130), on détermine encore d'autres informations de mesure (210.1), de préférence un type et/ou une température d'un aliment préparé et/ou un contenu d'un récipient d'agitation (24) d'un robot ménager (10) et/ou un poids sur le robot ménager (10) et/ou une information visuelle sur l'aliment et/ou l'intérieur du récipient d'agitation (24) et/ou d'autres paramètres sur le robot ménager (10), en particulier un courant de moteur d'un agitateur (51) du robot ménager (10).

12. Procédé (100) selon l'une quelconque des revendications précédentes,
**caractérisé en ce que**
les étapes a) à c) sont effectuées en temps réel pendant la variation temporelle de la grandeur de mesure, en particulier pendant le fonctionnement d'un robot ménager (10) et/ou **en ce que** les propositions de paramètres de système (230) sont déterminées et/ou mises à disposition au moins en partie à l'aide de valeurs aléatoires.

13. Procédé (100) selon l'une quelconque des revendications précédentes,
**caractérisé en ce que**
le ou les paramètres (230) du système sont réalisés chacun sous la forme d'au moins l'un des paramètres suivants, notamment ceux qui sont inconnus pendant l'exécution des étapes a) à c) :
- une capacité thermique spécifique, en particulier d'une plaque chauffante (53.1) d'un robot ménager (10),
- une puissance d'un élément chauffant (53), de préférence du robot ménager (10),
- un coefficient de transfert de chaleur, qui dépend de préférence d'un contenu d'un récipient d'agitation (24) du robot ménager (10),
- une masse de la plaque chauffante (53.1).

14. Procédé (100) selon l'une quelconque des revendications précédentes,
**caractérisé en ce que**
le contrôle selon l'étape b), en particulier l'évaluation (105), est effectué de manière répétée avec au moins 5 ou au moins 10 ou au moins 100 ou au moins 1000 répétitions, ce qui permet, à l'aide de l'évaluation successivement affinée, de se rapprocher de la valeur vraie lors de l'estimation (150), en particulier **en ce que** l'évaluation permet de déterminer la proposition de paramètre de système qui se rapproche le plus du paramètre de système (230).
